(19) Europäisches Patentamt
European Patent Office
Office européen des brevets

(11) **EP 1 553 429 B1**

(12) **FASCICULE DE BREVET EUROPEEN**

(45) Date de publication et mention
de la délivrance du brevet:
**27.04.2011 Bulletin 2011/17**

(51) Int Cl.:
***G01S 17/46*** *(2006.01)*

(21) Numéro de dépôt: **05290009.9**

(22) Date de dépôt: **04.01.2005**

(54) **Système et procédé de détection de conditions de circulation pour véhicule automobile**

System und Verfahren für ein Fahrzeug um die Verkehrsbedingungen zu detektieren

System and method for detecting the circulation condition in a vehicle

(84) Etats contractants désignés:
**AT BE BG CH CY CZ DE DK EE ES FI FR GB GR HU IE IS IT LI LT LU MC NL PL PT RO SE SI SK TR**

(30) Priorité: **09.01.2004 FR 0400149**

(43) Date de publication de la demande:
**13.07.2005 Bulletin 2005/28**

(73) Titulaire: **VALEO VISION**
**93012 Bobigny Cedex (FR)**

(72) Inventeurs:
• **Albou, Pierre**
**75013 Paris (FR)**
• **Leleve, Joël**
**93800 Epinay sur Seine (FR)**

(56) Documents cités:
EP-A- 0 505 237     EP-A- 1 298 481
EP-A- 1 369 639     FR-A- 2 676 977
US-A- 4 931 767     US-A- 5 499 168
US-A- 6 108 084

## Description

*Domaine de l'invention*

L'invention concerne un système pour détecter des conditions de circulation sur une route, comme des conditions météorologiques ou bien des conditions de proximité d'un autre véhicule. Ce système est monté sur un véhicule automobile. L'invention concerne également un procédé mis en oeuvre par ce système de détection.

L'invention trouve des applications dans le domaine des véhicules circulant sur routes et notamment les véhicules automobiles. Elle trouve, en particulier, des applications dans le domaine de la projection de lumière par ces véhicules sur la route.

*Etat de la technique*

Compte tenu du nombre important de véhicules circulant sur les routes, il est nécessaire de procurer à ces véhicules un éclairage le mieux adapté possible aux conditions de circulation. En particulier, la nuit ou par mauvais temps (brouillard, pluie, neige, etc.), il est important que le conducteur puisse avoir une vision optimale de la route qui s'étend devant lui. Autrement dit, pour des questions de sécurité, on cherche à améliorer l'éclairage de la scène de route située devant le véhicule et à augmenter le nombre d'informations à fournir au conducteur concernant les conditions de circulation.

On connaît par exemple du document EP - 1 298 481 un système de vision nocturne pour véhicule, comportant un dispositif d'émission de radiation infrarouge, un dispositif de détection de la radiation infrarouge coopérant avec le dispositif d'émission, et un dispositif d'affichage de l'image infrarouge reçue par le dispositif de détection, le dispositif d'émission infrarouge comprenant une source d'émission à semi-conducteur qui peut être commandée pour émettre la radiation infrarouge par impulsions.

Le document EP - 0 505 237 divulgue un système comprenant deux projecteurs et deux caméras. Les projecteurs éclairent, l'un, dans un domaine proche de l'infrarouge, et l'autre, dans un domaine proche de l'ultraviolet. L'une des caméras est de type CCD et est sensible aux rayons IR. L'autre caméra est de type CID et est sensible aux rayons UV. Des circuits électroniques sont prévus de manière à former une trame d'image complète à partir des lignes paires fournies par l'une des caméras et des lignes impaires fournies par l'autre caméra.

Le document US - 4 931 767 décrit un procédé de mesure de visibilité dans un véhicule automobile, faisant appel à une mesure du temps de trajet d'un faisceau IR réfléchi de type impulsionnel. Ce procédé autorise la détection du brouillard.

Le document US - 6 108 084 décrit un détecteur assurant à la fois une détection de pluie sur le pare-brise d'un véhicule et une détection de plage de visibilité. Dans une forme de réalisation de ce détecteur, une source lumineuse 1 de type diode laser émet un faisceau modulé par impulsion qui se propage en partie en zigzag dans l'épaisseur du pare-brise et en partie à travers le pare-brise vers le lointain. Une photodiode délivre un signal de mesure qui comporte une portion correspondant à la partie du faisceau transmise par l'épaisseur du pare-brise et une portion correspondant à la partie transmise à travers le pare-brise et rétro-réfléchie depuis le lointain. La rétro-réflexion du faisceau peut être due au brouillard. La séparation des deux portions de mesure du signal reçu par la photodiode est obtenue par une prise en compte de temps de trajets distincts pour les deux portions de signal et en utilisant une corrélation avec l'impulsion émise. Les portions de mesure sont ensuite analysées, par exemple, par des comparaisons à des seuils, afin de déterminer la présence ou l'absence de pluie et une plage de visibilité.

Pour améliorer la vision de la scène de route, il existe de nombreux dispositifs adaptés sur les véhicules et destinés à fournir, au conducteur, une image de la scène de route en cas de mauvaise visibilité, par exemple, la nuit. Cependant, l'intégration de toutes les fonctions d'éclairage que l'on installe maintenant sur les véhicules ainsi que toutes les fonctions d'aide à la conduite, comme l'affichage d'images de la scène de route, entraîne un encombrement important et, en particulier, un encombrement des projecteurs d'éclairage utilisés pour réaliser ces fonctions. Les fabricants de projecteurs pour véhicules cherchent donc, tout en intégrant un nombre de fonctions d'éclairage important, à ne pas augmenter la surface apparente des projecteurs dans la face avant du véhicule. Pour remédier à cet inconvénient d'encombrement, il existe un projecteur d'éclairage pour véhicule automobile qui intègre à la fois une source lumineuse fournissant une lumière dans le domaine du visible et une source lumineuse fournissant une lumière infrarouge. Un tel projecteur, connu du document EP - 1 369 639, est représenté sur la figure 1.

Ce projecteur comporte, agencé d'arrière en avant suivant un axe optique longitudinal, un réflecteur de type elliptique 14, une source lumineuse principale 16 agencée au voisinage d'un premier foyer du réflecteur, un cache 12 comportant un bord de coupure agencé au voisinage d'un second foyer du réflecteur de manière à former une coupure dans le faisceau d'éclairage produit par le projecteur 10, et une lentille convergente principale 18 dont un plan focal passe au voisinage du second foyer du réflecteur. Ce projecteur comporte également une source lumineuse secondaire 11 agencée entre le cache et la lentille principale et un élément optique de répartition 13 agencé devant le cache de manière à répartir les rayons lumineux émis par la source secondaire sur la surface d'entrée 19 de la lentille principale, en vue de réaliser un faisceau d'éclairage secondaire.

La seconde source lumineuse de ce projecteur est une diode laser qui émet un faisceau d'éclairage infrarouge. Cette seconde source lumineuse est agencée axialement entre le cache 12 et la lentille 18. L'élément optique de répartition est agencé devant le cache de manière à répartir les rayons lumineux émis par la diode 11 sur la surface d'entrée 19 de la lentille 18 en vue de réaliser un faisceau d'éclairage secondaire. Le faisceau d'éclairage infrarouge est généralement utilisé pour éclairer axialement en avant du faisceau de croisement et, combiné avec une caméra de lumière infrarouge, pour former une image des obstacles éventuellement détectés dans la scène de route, sur un écran de contrôle agencé dans l'habitacle du véhicule. Or, il est à noter qu'il est particulièrement difficile d'intégrer une fonction d'éclairage à lumière infrarouge, qui est invisible, dans un véhicule, en raison du danger que représente l'observation des rayons infrarouge par un oeil humain.

Dans ce projecteur, le faisceau d'éclairage infrarouge sort de la même surface que le faisceau d'éclairage principal en lumière visible. Pour cela, la diode laser est agencée en dehors du trajet des rayons lumineux issus de la lampe 17 et passant le cache 12 pour atteindre la surface d'entrée 19 de la lentille 18. La diode laser comporte un élément optique qui est prévu pour diriger les rayons infrarouges émis par la diode laser sur l'élément optique de répartition 13. Cet élément optique est, par exemple, une lentille convergente ou bien un élément optique diffractif, tel qu'un hologramme pouvant être collé sur la diode laser.

Les rayons infrarouges sont donc émis, à la sortie de l'élément optique, suivant une direction de diffusion lumineuse B-B qui est inclinée par rapport à l'axe optique principal A-A et qui est orientée de la diode 11 vers l'élément optique de répartition 13, c'est-à-dire de l'avant vers l'arrière.

L'élément optique de répartition 13 peut être un réflecteur ou un diffuseur anisotrope ou encore un diffuseur isotrope. Dans le cas d'un diffuseur anisotrope, celui-ci peut comporter un support revêtu d'un matériau isotrope, par exemple de l'oxyde de magnésium, dans lequel est gravé un réseau de motifs élémentaires de diffusion optique. Le diffuseur peut aussi être de type interférentiel. L'élément optique de répartition 13 est conçu de façon à renvoyer la lumière qu'il reçoit de manière contrôlée, dans un angle solide de diffusion. Il peut donc être agencé au voisinage du second foyer de la lentille 18 et choisi de manière à ce que son angle solide de diffusion corresponde globalement à l'angle solide défini par le second foyer de la lentille 18 avec la surface d'entrée 19 de la lentille. Il est fixé sur la face avant de la partie occultante 17 du cache 12, à proximité de l'axe optique principal A-A.

Dans le cas où l'élément optique de répartition 13 est un diffuseur (mais cela est également valable pour les autres modes de réalisation de cet élément optique), lorsque la diode laser 12 est allumée, elle émet des rayons infrarouges qui sont dirigés sur la face avant du diffuseur 13. Ce dernier renvoie les rayons infrarouges sur la surface d'entrée 19 de la lentille 18. La diode laser est allumée en même temps que la première source lumineuse. Le faisceau infrarouge est alors émis dans la zone d'éblouissement du faisceau de croisement. Ce positionnement du faisceau infrarouge permet d'éviter, aux conducteurs de véhicules circulant en sens inverse ainsi qu'aux piétons se trouvant dans la scène de route, de regarder directement le faisceau infrarouge en raison du réflexe pupillaire provoqué par les rayons lumineux visibles émis dans la zone d'éblouissement. Ce projecteur permet donc de diminuer le risque qu'une personne observe directement le faisceau lumineux infrarouge, sans protection, puisque la source infrarouge est isolée de l'extérieur par la lentille 18 et par l'élément optique.

Un tel projecteur de lumière infrarouge à diode laser présente l'avantage de couvrir complètement la zone d'intérêt, c'est-à-dire la scène de route comprenant la route située à l'avant du véhicule et les bas côtés de la route, sans balayage, tout en évitant les risques qu'une personne située dans la scène de route ou dans un véhicule en sens inverse puisse regarder la lumière infrarouge de face, avec tous les risques que cela entraîne.

Associé avec une caméra infrarouge, ce projecteur permet d'afficher, sur un écran de contrôle situé à l'intérieur du véhicule, une image de la scène de route montrant les différents obstacles se trouvant dans cette scène de route.

Cependant, ce projecteur ne permet pas au conducteur de connaître la distance entre l'obstacle et son véhicule, lorsque les conditions climatiques sont mauvaises, notamment en présence de nébulosités, par exemple par temps de brouillard ou par temps de pluie. En effet, en cas de nébulosités, le dispositif précédent ne permet pas de détecter la présence d'un obstacle, par exemple un autre véhicule. Le conducteur peut donc penser qu'il n'y a pas d'obstacle dans la scène de route, avec tous les risques que cela peut entraîner. Connaître la distance est utile pat temps clair, cette donnée pouvant être exploitée par ailleurs par divers systèmes d'automatisme. Et par mauvais temps, le système ne pourra parfois que fournir la distance de visibilité, mais cette information est également importante/intéressante, par exemple pour calculer une vitesse limite de sécurité.

*Exposé de l'invention*

L'invention a justement pour but de remédier aux inconvénients du dispositif exposé précédemment. A cette fin, l'invention propose un système qui, associé au projecteur décrit précédemment, permet de déterminer les conditions de circulation sur la route, comme la distance entre un obstacle et le véhicule du conducteur ou la présence de brouillard ou autres facteurs météorologiques, de nature à modifier le comportement routier du conducteur.

Pour cela, l'invention propose d'évaluer le temps de vol de la lumière entre un top d'émission de la lumière, la réflexion de cette lumière sur un obstacle et son retour vers un capteur de lumière ou bien le déphasage entre une lumière émise modulée et la lumière rétrodiffusée reçue. Ce temps de vol renseigne sur la distance entre l'obstacle et la source de lumière et également, si l'allure du signal de réponse a été modifiée par rapport au signal émis, sur la présence de brouillard ou de pluie. Autrement dit, le système de l'invention permet, soit de détecter la distance d'un éventuel obstacle en l'absence de nébulosité, soit de déterminer/localiser la présence de nébulosités et, dans ce cas, de calculer la distance de visibilité.

Pour cela, le véhicule doit être équipé de deux projecteurs du type décrit précédemment ainsi que d'au moins un capteur de lumière qui permet d'effectuer, avec les diodes laser des projecteurs, un calcul de triangulation permettant de déterminer, en distance et en azimut, un éventuel obstacle placé devant le véhicule.

De façon plus précise, l'invention concerne un système de détection de conditions de circulation sur une route, monté sur un véhicule automobile comportant

- au moins un projecteur droit et un projecteur gauche comprenant chacun une première source lumineuse émettant un faisceau lumineux visible,
- au moins une caméra de prise d'images de la scène de route,
  caractérisé en ce que au moins un projecteur lumineux comprend
- une seconde source lumineuse émettant un faisceau lumineux infrarouge en direction d'une scène de route et/ou
- un capteur de lumière distinct de la caméra de prise d'images de la scène de route, apte à recevoir le faisceau lumineux infrarouge réfléchi par la scène de route,
- le faisceau lumineux infrarouge transportant un signal modulé émis, notamment de haute fréquence, et en ce que le système comporte :
- des moyens optiques pour diriger au moins une partie du faisceau infrarouge réfléchi vers ledit capteur de lumière, et
- des moyens pour détecter dans le faisceau infrarouge réfléchi un signal modulé reçu correspondant au signal modulé émis, et déterminer lesdites conditions de circulation en fonction du temps de vol de la lumière entre un top d'émission de la lumière, la réflexion de cette lumière sur un obstacle et son retour vers le capteur de lumière (36) ou en fonction du déphasage entre une lumière émise modulée et la lumière rétrodiffusée reçue.

Avantageusement, le système de l'invention peut comporter les améliorations suivantes :

- le capteur de lumière est un photodétecteur rapide,
- les moyens optiques comportent des moyens de collimation du type objectif ou lentille pour former une image de la scène de route sur le capteur de lumière,
- les moyens optiques comportent un réflecteur pour réfléchir au moins une partie du faisceau infrarouge réfléchi vers la caméra de prise d'images et vers le capteur de lumière,
- le réflecteur est une lame semi-transparente placée à l'intérieur de la caméra,
- le capteur est intégré dans la caméra de prise d'images ou dans le projecteur lumineux,
- la seconde source lumineuse est une diode laser,
- le système comporte deux capteurs de lumière, chaque capteur étant intégré dans un projecteur du véhicule ou dans une caméra,
- le système comporte deux secondes sources lumineuses, installées chacune dans un projecteur et émettant chacune un faisceau lumineux infrarouge, les deux faisceaux infrarouges étant captés par au moins un capteur de lumière,
- le faisceau lumineux infrarouge est modulé en continu ou par impulsions,
- les faisceaux infrarouges émis par les deux secondes sources lumineuses sont modulés indépendamment l'un de l'autre.

Ce système a l'avantage de pouvoir être mis en oeuvre à partir d'un projecteur existant, en incorporant des éléments dont le coût est relativement peu élevé.
L'invention concerne également le procédé mis en oeuvre par le système de l'invention. Ce procédé comporte les opérations suivantes :

- émission d'au moins un faisceau lumineux infrarouge modulé,
- capture d'au moins un faisceau infrarouge réfléchi par un obstacle ou une nébulosité dans la scène de route,
- analyse du faisceau infrarouge réfléchi, et
- détermination, en fonction du temps de parcours ou déphasage et de la forme du faisceau infrarouge réfléchi, d'au moins une des conditions de circulation suivantes :

- présence / absence d'une nébulosité,
- distance entre un éventuel obstacle et le véhicule automobile, et
- distance de visibilité en présence de nébulosité.

Avantageusement, le procédé peut comporter l'une ou l'autre des variantes suivantes :

- l'opération de détermination fait appel à une triangulation entre deux sources de lumière modulable et un capteur de lumière,
- l'opération de détermination fait appel à une triangulation entre une source de lumière modulable et deux capteurs de lumière,
- l'opération de détermination fait appel à une triangulation entre deux sources de lumière modulable et deux capteurs de lumière.

L'invention concerne aussi un véhicule comportant le système de détection de l'invention.

*Brève description des dessins*

La figure 1, déjà décrite, représente un projecteur à diode laser selon l'art intérieur.

La figure 2 représente schématiquement les trajectoires d'émission et de capture des faisceaux lumineux dans le système de l'invention.

La figure 3 représente le système de détection des conditions de circulation selon l'invention.

Les figures 4A, 4B et 4C représentent schématiquement trois cas de triangulation pouvant être obtenus avec le système de l'invention.

*Description détaillée de mode de réalisation de l'invention*

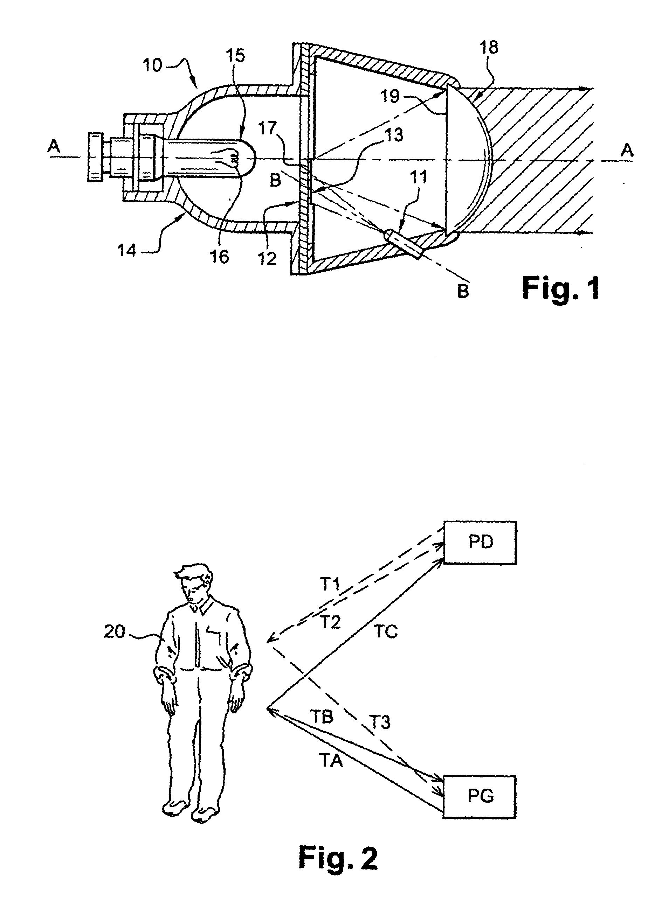

L'invention concerne un système qui associe, au projecteur de la figure 1, un capteur de lumière permettant de mettre en oeuvre un procédé de triangulation entre le capteur et les diodes lasers des projecteurs. Ce système, avec ses émissions et ses captures de faisceaux lumineux, est schématisé sur la figure 2. Sur cette figure 2, on a représenté le projecteur droit PD et le projecteur gauche PG d'un véhicule. Ces projecteurs sont des projecteurs du type représenté sur la figure 1. L'un au moins de ces projecteurs comporte au moins une source de lumière modulable, notamment à haute fréquence. Cette source de lumière peut être une source laser. Dans le mode de réalisation de la figure 2, la source de lumière modulable est une diode laser. Dans une variante de l'invention, deux diodes laser sont associées dans un même projecteur.

Dans l'invention, on associe à ce projecteur au moins un capteur de lumière. Ce capteur de lumière peut être intégré dans un des projecteurs PD ou PG. Il peut aussi être disposé ailleurs que dans un projecteur, par exemple, dans l'habitacle du véhicule derrière le pare-brise ou bien dans un rétroviseur du véhicule.

Dans l'exemple de la figure 2, le système de l'invention comporte deux diodes laser et deux capteurs de lumière intégrés chacun dans un projecteur du véhicule. Dans ce cas, lorsque la fonction d'éclairage du véhicule est en fonctionnement, la diode laser du projecteur PD émet un faisceau lumineux infrarouge suivant la trajectoire T1, vers la scène de route. En présence d'un obstacle 20 dans cette scène de route, ce faisceau infrarouge est réfléchi par l'obstacle 20. Le capteur de lumière intégré dans le projecteur PD capte ce faisceau réfléchi suivant une trajectoire T2. Le capteur intégré dans le projecteur PG capte ce même faisceau réfléchi suivant une trajectoire T3.

Parallèlement, la diode laser du projecteur PG émet un faisceau lumineux infrarouge suivant la trajectoire TA, vers la scène de route. En présence d'un obstacle 20 dans cette scène de route, ce faisceau infrarouge est réfléchi par l'obstacle 20. Le capteur de lumière intégré dans le projecteur PG capte ce faisceau réfléchi suivant une trajectoire TB. Le capteur intégré dans le projecteur PD capte ce même faisceau réfléchi suivant une trajectoire TC.

Un calculateur du véhicule, connecté aux capteurs de lumière, permet de déterminer le temps de vol des faisceaux lumineux émis par les projecteurs PD et PG. En particulier, le calculateur détermine le temps de vol entre le moment d'émission du faisceau IR (infrarouge) émis par le projecteur PD, sa réflexion sur l'obstacle selon T2 et sa réception par le capteur du projecteur PD. La détermination de ce temps de vol renseigne sur la distance de l'obstacle à la source lumineuse, c'est-à-dire à la diode laser.

De même, le calculateur détermine le temps de vol entre le moment d'émission du faisceau IR émis par le projecteur PG, sa réflexion sur l'obstacle selon TC et sa réception par le capteur du projecteur PD.

Ces distances entre l'obstacle et chacune des diodes laser sont déterminées par une méthode de triangulation qui va être décrite ultérieurement.

Lorsque le système comporte un seul capteur, par exemple celui installé dans le projecteur PD, et deux diodes laser (une dans chaque projecteur) il est possible de déterminer le temps de vol de chacun des deux faisceaux IR, ce qui permet de déterminer les distances entre l'obstacle et chacune des diodes.

Lorsque le système comporte deux capteurs, installés chacun dans un projecteur, et une seule diode, par exemple montée dans le projecteur PD, il est possible de déterminer le temps de vol de l'unique faisceau infrarouge entre chacun des deux capteurs, ce qui permet de déterminer les distances entre l'obstacle et chacun des capteurs.

Quel que soit le nombre de capteurs et de diodes laser du système, le calculateur peut déterminer, par triangulation, le positionnement en distance et en azimut d'un obstacle dans la scène de route.

Cette technique de triangulation consiste à considérer, dans le cas de deux faisceaux infrarouge, un premier arc de cercle correspondant au faisceau lumineux émis par le projecteur droit et un second arc de cercle émis par le projecteur gauche, et à faire l'intersection entre les deux arcs de cercle pour déterminer l'emplacement, en distance et en azimut, de l'obstacle.

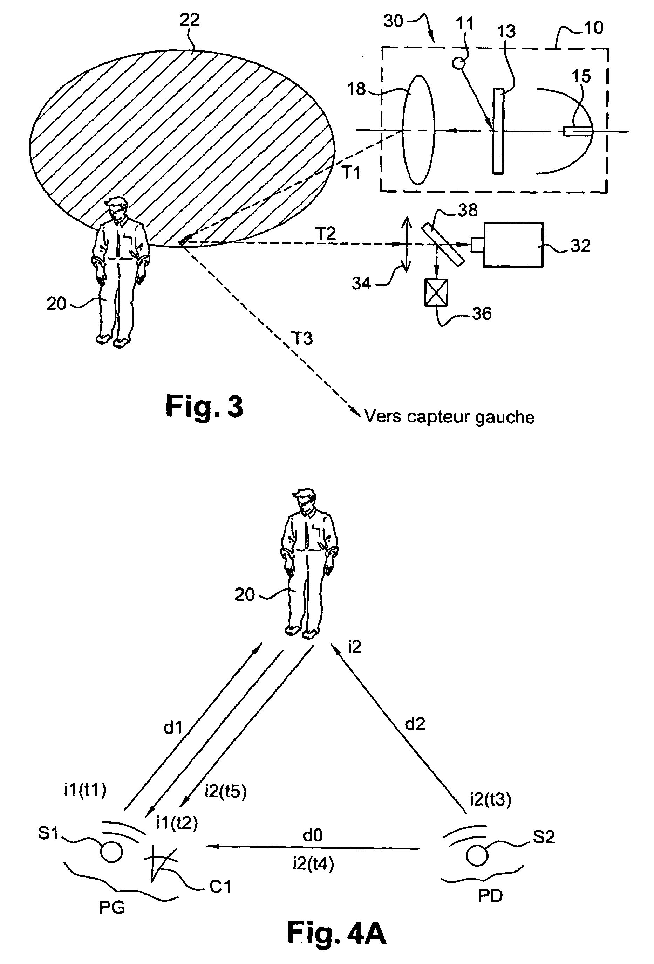

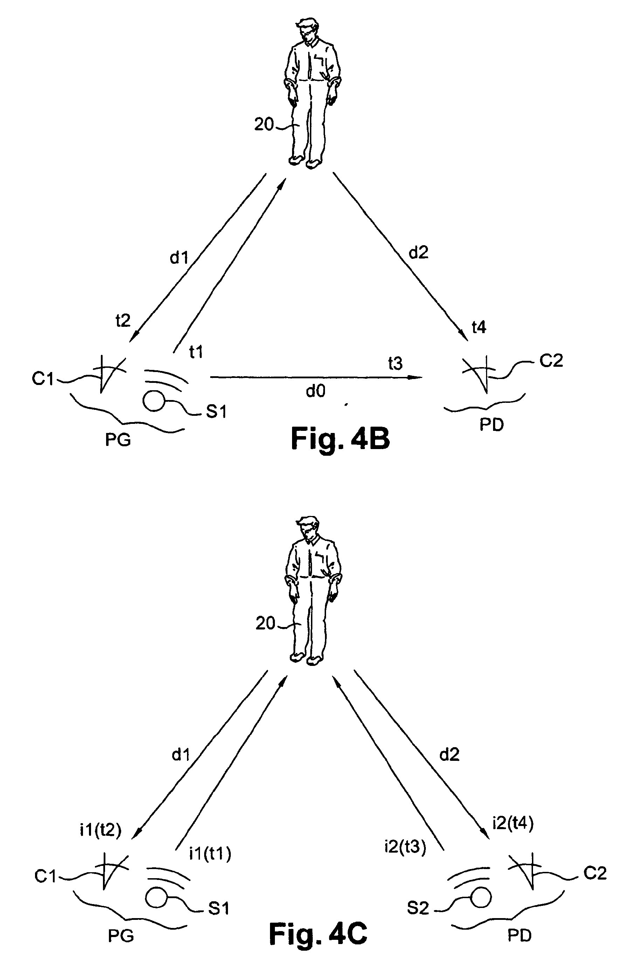

Sur les figures 4A, 4B et 4C, on a représenté trois cas de triangulation correspondant à trois modes de réalisation de l'invention.

Dans le cas de la figure 4A, le système de l'invention comporte une première diode laser S1, montée dans le projecteur PG, une seconde diode laser S2 montée dans le projecteur PD et un capteur C1 monté dans le projecteur PG. Une distance d1 sépare le projecteur PG et l'obstacle 20, une distance d2 sépare le projecteur PD et l'obstacle 20, une distance d0 sépare les projecteurs PD et PG. Une impulsion i1 est émise à un temps t1 par la diode S1 en direction de la scène de route ; cette impulsion i1 est reçue à un temps t2 par le capteur C1.

Une impulsion i2 est émise à un temps t3 par la diode S2 en direction de la scène de route ; cette impulsion i2 est reçue à un temps t5 par le capteur C1 après réflexion par l'obstacle 20. Cette même impulsion i2 est reçue à un temps t4 par le projecteur PG, en provenance directe du projecteur PD. Cette impulsion i2(t4) est un retour d'information transmis, soit librement par propagation dans l'air d'un projecteur à l'autre (éventuellement au moyen de prismes), soit par fibre optique entre les deux projecteurs.

Dans le cas de la figure 4A, le capteur mesure les temps de vol t1, t2, t4 et t5. Le calculateur détermine la distance d1 suivante :

$$d1 = (t2 - t1) \times c/2,$$

où c est la vitesse de la lumière dans le milieu considéré, et la distance d2 suivante :

$$t3 = t4 - d0/c$$

et

$$(t5 - t3)c = d2 + d1$$

d'où

$$d2 = (t5 - t4)c + d0 - (t2 - t1)c/2$$

L'obstacle est situé à l'intersection des deux demi cercles de rayons d1 et d2 centrés, respectivement, sur les projecteurs PG et PD.

Dans le cas de la figure 4B, le système de l'invention comporte une diode laser S1, montée dans le projecteur PG, un premier capteur C1 monté dans le projecteur PG et un second capteur C2 monté dans le projecteur PD. Une distance d1 sépare le projecteur PG et l'obstacle 20, une distance d2 sépare le projecteur PD et l'obstacle 20, une distance d0 sépare les projecteurs PD et PG. Le faisceau infrarouge émis par la diode S1 au temps t1 est reçu par le capteur C1 au temps t2 et, après réflexion sur l'obstacle 20, par le capteur C2 au temps t4. L'impulsion d'émission du faisceau est reçue au temps t3 par le projecteur PD.

Dans le cas de la figure 4B, le capteur C1 mesure les temps de vol t1 et t2 et le capteur C2 mesure t3 et t4. Le calculateur détermine la distance d1 suivante :

$$d1 = (t2 - t1) \times c/2,$$

où c est la vitesse de la lumière dans le milieu considéré,

et la distance d2 suivante :

$$t1 = t3 - d0/c$$

et

$$(t4 - t1)c = d1 + d2$$

d'où

$$(t4 - t3)c + d0 - (t2 - t1)c/2 = d2.$$

Dans le cas de la figure 4C, le système de l'invention comporte, d'une part, une diode laser S1 et un capteur C1 dans le projecteur PG et, d'autre part, une diode laser S2 et un second capteur C2 dans le projecteur PD. Une distance d1 sépare le projecteur PG et l'obstacle 20, une distance d2 sépare le projecteur PD et l'obstacle 20. Le faisceau infrarouge émis par la diode S1 au temps t1 est reçu par le capteur C1 au temps t2.. Le faisceau infrarouge émis par la diode S2 au temps t3 est reçu par le capteur C2 au temps t4.

Dans le cas de la figure 4C, le capteur C1 mesure le temps de vol t2 et le capteur C2 mesure t4. Le calculateur détermine les distances d1 et d2 suivantes :

$$d1 = (t2 - t1) \times c/2,$$

$$d2 = (t4 - t3) \times c/2.$$

Dans le cas de la figure 4C, un retour d'information peut exister entre les deux projecteurs PG et PD. Ainsi, si l'un des éléments du système est défaillant (par exemple une diode laser ou un capteur), la méthode de triangulation des figures 4A ou 4B peut s'appliquer.

Sur la figure 3, on a représenté un projecteur associé à un capteur de lumière selon l'invention. Ce système 30 comporte un projecteur 10 du type de celui de la figure 1, équipé d'une source lumineuse 15 et d'éléments optiques 13 et 18 décrits précédemment. Sur cette figure 3, un seul projecteur a été représenté. Il est bien entendu qu'un véhicule comporte deux projecteurs, les deux projecteurs pouvant comporter chacun une diode laser émettant chacune un faisceau lumineux infrarouge. Les deux faisceaux infrarouges peuvent être captés par une même capteur ou bien par deux capteurs distincts pour permettre une mesure par triangulation, comme expliqué précédemment.

Ce projecteur 10 comporte également une diode laser 11 assurant l'émission d'un faisceau IR dans la zone d'éblouissement du faisceau de lumière visible. Ce projecteur 10 éclaire la scène de route avec un faisceau 22 comportant des rayonnements visibles et des rayonnements infrarouge. La lentille 18 du projecteur permet de diriger ce faisceau lumineux vers la scène de route, selon la direction habituelle d'un feu de croisement.

A ce projecteur 10, est associée une caméra vidéo 32, de préférence à rayonnements infrarouges, qui assure la prise d'images de la scène de route éclairée par le faisceau 22. Cette caméra 32 peut être installée dans le projecteur de lumière 10 ou bien derrière le pare-brise du véhicule ou encore sur l'un ou l'autre des rétroviseurs du véhicule. Différents endroits sont utilisés classiquement pour positionner cette caméra de prise de vue. Le système de l'invention peut s'adapter à ces mêmes emplacements.

Selon l'invention, des moyens optiques sont utilisés pour diriger au moins une partie du faisceau infrarouge réfléchi vers le ou les capteur(s). Ces moyens optiques peuvent être des moyens de collimation du type objectif ou lentille qui forment une image de la scène de route sur le capteur. Ces moyens optiques peuvent être aussi un réflecteur qui réfléchi au moins une partie du faisceau infrarouge réfléchi vers la caméra et vers le capteur.

Dans un mode de réalisation de l'invention, le réflecteur est une lame semi-transparente 38 intégrée dans la caméra et assurant la réflexion des faisceau IR réfléchis par l'obstacle, à la fois vers la caméra 32 et vers le capteur 36. Dans ce cas, au moins un capteur 36 est installé à proximité de la caméra 32. Ce capteur 36 peut aussi être intégré dans la caméra. La lame semi-transparente 38 permet de fournir à la caméra et au capteur de lumière le même faisceau IR. Ainsi, la caméra 32 et le capteur 36 peuvent traiter, chacun séparément, le même faisceau IR afin, respectivement d'afficher les images de la scène de route sur un écran et de déterminer les conditions de circulation.

Cette lame semi-transparente a la particularité de renvoyer la longueur d'onde du laser uniquement, vers le capteur. Cette lame peut être un réflecteur interférentiel multicouche, un réflecteur de bragg, etc. Cette lame 38 peut être aussi une lame de verre avec un traitement anti-réfléchissant qui permet une bonne transmission du faisceau lumineux visible, destiné à la caméra 32.

Dans le mode de réalisation préféré de l'invention, le capteur de lumière 36 est un photodétecteur rapide.

Dans le mode de réalisation montré sur la figure 3, le capteur 36 et la lame semi-transparente 38 sont intégrés dans la caméra 32, juste derrière l'objectif 34 de ladite caméra. Il est à noter, toutefois, que ce capteur 36 peut être placé en extérieur de la caméra, mais à proximité de celle-ci afin de pouvoir capter le même faisceau IR réfléchi.

Dans un autre mode de réalisation, le capteur est intégré dans un projecteur du véhicule et la caméra est installée dans l'habitacle du véhicule. Les moyen optique utilisé pour dirigé le faisceau infrarouge vers la capteur n'est alors pas une lame semi-transparente. Ce moyen optique peut être une lentille ou un objectif.

Dans l'exemple de la figure 3, le projecteur représenté est le projecteur droit du véhicule. Comme expliqué en liaison avec la figure 2, un seul capteur est nécessaire pour déterminer la distance entre l'obstacle et la source lumineuse. Ce capteur peut être placé dans ou à proximité de la caméra, elle-même intégrée ou non dans le projecteur droit. Dans le cas, où le système de l'invention comporte deux capteurs, alors chaque capteur est associé à une lame semi-transparente et installé à proximité d'une caméra afin que chaque capteur reçoive le même faisceau IR que l'une des caméras du système.

Le système de l'invention tel qu'il vient d'être décrit met en oeuvre le procédé suivant : lorsque la source de lumière visible 10 du véhicule émet un faisceau lumineux visible, la diode de laser 11 émet simultanément un faisceau lumineux infrarouge. Ce faisceau IR est modulé et transmis par la lentille 18 suivant la trajectoire T1. Ce faisceau IR est réfléchi par l'obstacle 20. Le capteur 36 de l'invention mesure alors le temps de vol de ce faisceau depuis l'obstacle 20 jusqu'au capteur suivant la trajectoire T2. Si le système de l'invention comporte un second capteur, alors le temps de réflexion du signal depuis l'obstacle 20 jusqu'au second capteur est également mesuré suivant une trajectoire T3.

Le système de l'invention permet de mesurer le temps de parcours, ou temps de vol, du faisceau IR, comme expliqué précédemment, pour en déduire la distance entre l'obstacle et le véhicule. Il permet aussi d'analyser la forme du faisceau IR capté et d'en déduire des conditions météorologiques et, plus précisément, la présence de nébulosités. Pour cela, le faisceau infrarouge émis par la diode laser est modulé, soit en impulsions, soit en continu. A réception du faisceau IR réfléchi par l'obstacle, le capteur analyse la forme de ce faisceau, c'est-à-dire qu'il regarde si le faisceau réfléchi a gardé une modulation de même forme que celle qu'il avait à l'émission ou bien si sa modulation a été modifiée. Autrement dit, le système de l'invention permet la détection de conditions météorologiques par mesure de l'amortissement de l'impulsion de retour, c'est-à-dire de l'étalement temporel lié à une décroissance exponentielle de l'intensité.

Si la réponse du signal a une allure d'exponentielle croissante puis décroissante, alors le système en déduit qu'il y a présence de brouillard. En effet, par temps de brouillard, il se crée une dispersion du faisceau lumineux à travers chaque particule en suspension dans l'air. Le faisceau capté est donc diffracté. En effet, on comprend que lorsque l'air est rempli d'humidité, c'est-à-dire de petites particules d'eau en suspension, le faisceau lumineux est réfléchi, non pas directement par l'obstacle, mais par les différentes petites particules d'humidité se trouvant sur la trajectoire, avant l'obstacle. Le faisceau réfléchi arrive donc très rapidement mais de façon très étalée sur le capteur. Celui-ci peut alors en déduire qu'il y a de l'humidité dans l'air et qu'il s'agit de brouillard. Dans le cas contraire, si le faisceau lumineux circule dans une atmosphère transparente, alors le signal est réfléchi avec quasiment la même forme et il est capté avec un certain retard. En conséquence, l'allure du faisceau réfléchi informe sur la nature de l'humidité extérieure. On peut donc, en fonction de la forme du faisceau reçu, déterminer la présence de brouillard ou bien la présence de pluie ou de neige.

Lorsque du brouillard est détecté, le système calcule la distance de visibilité, c'est-à-dire la distance jusqu'à laquelle il peut détecter un obstacle.

Dans le cas du brouillard, le faisceau infrarouge reçu a une forme exponentielle et le taux de décroissance de cette fonction exponentielle permet de connaître la distance de visibilité. En effet, plus le brouillard est dense, et donc l'air rempli de particules en suspension, et plus le chemin parcouru par le faisceau lumineux est court. Ainsi, plus le brouillard est dense et plus le front d'onde a une allure exponentielle. A contrario, si le brouillard est peu dense, le front d'onde est plus droit. Lorsqu'un signal de forme différente est détecté au milieu de cette courbe de forme exponentielle, alors on en déduit qu'il y a présence d'un objet diffusant. En fonction de la différence de forme du signal réfléchi par l'objet, par rapport au signal réfléchi environnant, on en déduit la distance de l'objet par rapport à la source lumineuse.

Pour analyser le temps de vol et la déformation du faisceau infrarouge entre son émission et sa capture par le capteur, le faisceau infrarouge doit être modulé à son émission. Autrement dit, le signal émis par la diode laser est modulé. Lorsque le système comporte deux diodes laser, chaque diode émet un faisceau infrarouge modulé indépendamment de l'autre.

Le faisceau IR peut être modulé en impulsions, c'est-à-dire qu'il est émis sous la forme d'une série d'impulsions d'une certaine durée. Dans ce cas, la diode laser peut être une diode à absorbant saturable qui a la propriété d'engendrer automatiquement des impulsions brèves.

Le signal peut également être modulé en continu. En raison de la vitesse de propagation finie de la lumière, le faisceau infrarouge réfléchi est déphasé par rapport au faisceau émis. La mesure du déphasage obtenu, réalisé par exemple à l'aide d'une PLL, permet de déduire la distance à laquelle se situe l'obstacle. Une telle modulation continue permet un bon rejet des parasites, du fait de la démodulation synchrone.

Ainsi, dans le cas d'une modulation par impulsions, on mesure, sur le capteur, un temps de parcours en nanosecondes. Dans le cas d'une modulation en continu, on mesure, à réception sur le capteur, le déphasage obtenu. Quelle que soit la modulation choisie, l'allure du signal réfléchi reste la même et fournit donc les mêmes indications de temps de vol de la lumière infrarouge.

Le système de l'invention tel qu'il vient d'être décrit peut être utilisé pour confirmer une présence d'obstacle détectée par la caméra, ou les caméras dans le cas d'une stéréovision, afin de sécuriser l'information par fusion de données. Réciproquement, un procédé de traitement d'images peut être mis en oeuvre, parallèlement au système de l'invention, pour éliminer d'éventuelles informations aberrantes issues du calcul de triangulation et consécutives, par exemple, à des réflexions parasites ou à des bruits intempestifs. En effet, puisque le système de l'invention utilise des projecteurs associés à une ou deux caméras de prise de vues, il est possible d'utiliser les images de ces caméras pour vérifier les informations fournies par les capteurs de lumière.

Le système de l'invention peut aussi être utilisé pour mettre en évidence une zone de danger, sur l'image affichée sur l'écran du véhicule par le système d'aide à la vision. Cette même information peut aussi être utilisée dans des applications de régulation automatique de la vitesse (Automatic cruise control, en termes anglo-saxons) pour maintenir une distance constante entre un véhicule qui précède et le véhicule équipé du système de l'invention. Cette information peut aussi être utilisée dans des procédés d'anti-collision ou bien pour vérifier la distance de sécurité correspondant à un temps de deux secondes entre véhicules, contrainte apparu récemment dans le code de la route.

## Revendications

**1.** Système de détection de conditions de circulation sur une route, monté sur un véhicule automobile comportant

    - au moins un projecteur droit (PD) et un projecteur gauche (PG) comprenant chacun une première source lumineuse (15) émettant un faisceau lumineux visible,
    - au moins une caméra (32) de prise d'images de la scène de route,
    **caractérisé en ce que** au moins un projecteur lumineux (30) comprend
    - une seconde source lumineuse (11) émettant un faisceau lumineux infrarouge (22) en direction d'une scène de route et/ou
    - un capteur de lumière (36) distinct de la caméra (32) de prise d'images de la scène de route apte à recevoir le faisceau lumineux infrarouge réfléchi par la scène de route,
    - le faisceau lumineux infrarouge (22) transportant un signal modulé émis, notamment de haute fréquence, et **en ce que** le système comporte :
    - des moyens optiques (38) pour diriger au moins une partie du faisceau infra-rouge réfléchi vers ledit capteur de lumière (36), et
    - des moyens pour détecter dans le faisceau infrarouge réfléchi un signal modulé reçu correspondant au signal modulé émis, et déterminer lesdites conditions de circulation en fonction du temps de vol de la lumière entre un top d'émission de la lumière, la réflexion de cette lumière sur un obstacle et son retour vers le capteur de lumière (36) ou en fonction du déphasage entre une lumière émise modulée et la lumière rétrodiffusée reçue.

**2.** Système selon la revendication 1, **caractérisé en ce que** le capteur de lumière est un photodétecteur rapide.

**3.** Système selon la revendication 1 ou 2, **caractérisé en ce que** les moyens optiques (38) comportent des moyens de collimation du type objectif ou lentille pour former une image de la scène de route sur le capteur de lumière.

**4.** Système selon la revendication 1 ou 2, **caractérisé en ce que** les moyens optiques (38) comportent un réflecteur pour réfléchir au moins une partie du faisceau infrarouge réfléchi vers la caméra de prise d'images et vers le capteur de lumière.

**5.** Système selon la revendication 4, **caractérisé en ce que** le réflecteur est une lame semi-transparente placée à l'intérieur de la caméra.

**6.** Système selon l'une quelconque des revendications 1 à 5, **caractérisé en ce que** le capteur est intégré dans la caméra de prise d'images ou dans le projecteur lumineux.

**7.** Système selon l'une quelconque des revendications 1 à 6, **caractérisé en ce que** la seconde source lumineuse (11) est une diode laser.

**8.** Système selon l'une quelconque des revendications 1 à 7, **caractérisé en ce qu'**il comporte deux capteurs de lumière, chaque capteur étant intégré dans un projecteur du véhicule ou dans une caméra.

**9.** Système selon l'une quelconque des revendications 1 à 8, **caractérisé en ce qu'**il comporte deux secondes sources lumineuses, installées chacune dans un projecteur et émettant chacune un faisceau lumineux infrarouge, les deux faisceaux infrarouges étant captés par au moins un capteur de lumière.

**10.** Système selon l'une quelconque des revendications 1 à 9, **caractérisé en ce que** le faisceau lumineux infrarouge est modulé en continu ou par impulsions.

**11.** Système selon la revendication 9 ou 10, **caractérisé en ce que** les faisceaux infrarouges émis par les deux secondes sources lumineuses sont modulés indépendamment l'un de l'autre.

**12.** Procédé de détection de conditions de circulation sur une route, mis en oeuvre par le système selon l'une quelconque des revendications 1 à 11, **caractérisé en ce qu'**il comporte les opérations suivantes :

- émission d'au moins un faisceau lumineux infrarouge modulé (22),
- capture d'au moins un faisceau infrarouge réfléchi par un obstacle ou une nébulosité dans la scène de route,
- analyse du faisceau infrarouge réfléchi, et
- détermination, en fonction du temps de parcours ou déphasage et de la forme du faisceau infrarouge réfléchi, d'au moins une des conditions de circulation suivantes :

- présence / absence d'une nébulosité,
- distance entre un éventuel obstacle et le véhicule automobile, et
- distance de visibilité en présence de nébulosité.

**13.** Procédé selon la revendication 12, **caractérisé en ce que** l'opération de détermination fait appel à une triangulation entre deux secondes sources lumineuses et un capteur de lumière.

**14.** Procédé selon la revendication 12, **caractérisé en ce que** l'opération de détermination fait appel à une triangulation entre une seconde source lumineuse et deux capteurs de lumière.

**15.** Procédé selon la revendication 12, **caractérisé en ce que** l'opération de détermination fait appel à une triangulation entre deux secondes sources lumineuses et deux capteurs de lumière.

**16.** Véhicule notamment de type automobile, **caractérisé en ce qu'**il comporte un système de détection de conditions de circulation sur une route selon l'une quelconque des revendications 1 à 11.

**Claims**

**1.** System for detection of conditions of travel on a road, fitted on a motor vehicle, comprising:

- at least one right-hand headlight (PD) and one left-hand headlight (PG), each comprising a first source of light (15) which emits a visible light beam; and
- at least one camera (32) to take images of the road scene;

**characterised in that** at least one light projector (30) comprises:

- a second source of light (11) which emits an infrared light beam (22) in the direction of a road scene, and/or;

- a light sensor (36) which is distinct from the camera (32) to take images of the road scene, and can receive the infrared light beam which is reflected by the road scene;

- with the infrared light beam (22) conveying a modulated signal emitted, which in particular has a high frequency, and **in that** the system comprises:

- optical means (38) to direct at least part of the infrared beam reflected towards the said light sensor (36); and

- means for detection in the infrared beam reflected of a modulated signal received, corresponding to the modulated signal emitted, and determination of the said conditions of travel according to the time of travel of the light between a signal for emission of the light, the reflection of this light on an obstacle, and its return to the light sensor (36), or according to the phase shift between a modulated light emitted and the backscattered light received.

2. System according to claim 1, **characterised in that** the light sensor is a rapid photodetector.

3. System according to claim 1 or 2, **characterised in that** the optical means (38) comprise collimation means of the objective or lens type, in order to form an image of the road scene on the light sensor.

4. System according to claim 1 or 2, **characterised in that** the optical means (38) comprise a reflector to reflect at least part of the infrared beam which is reflected to the camera for taking of images, and to the light sensor.

5. System according to claim 4, **characterised in that** the reflector is a semi-transparent plate which is placed inside the camera.

6. System according to any one of claims 1 to 5, **characterised in that** that sensor is integrated in the camera for taking of images or in the light projector.

7. System according to any one of claims 1 to 6, **characterised in that** the second source of light (11) is a laser diode.

8. System according to any one of claims 1 to 7, **characterised in that** it comprises two light sensors, each sensor being integrated in a headlight of the vehicle or in a camera.

9. System according to any one of claims 1 to 8, **characterised in that** it comprises two second sources of light, which are each installed in a headlight, and each emit an infrared light beam, with the two infrared beams being detected by at least one light sensor.

10. System according to any one of claims 1 to 9, **characterised in that** the infrared light beam is modulated continuously or by pulses.

11. System according to claim 9 or 10, **characterised in that** the infrared beams which are emitted by the two second sources of light are modulated independently from one another.

12. Method for detection of conditions of travel on a road, implemented by the system according to any one of claims 1 to 11, **characterised in that** it comprises the following operations:

    - emission of at least one modulated infrared light beam (22);
    - capturing of at least one infrared beam which is reflected by an obstacle or mistiness in the road scene;
    - analysis of the infrared beam reflected; and
    - determination, according to the travel time or phase shifting and the form of the infrared beam reflected, of at least one of the following conditions of travel:

        - presence / absence of mistiness;
        - distance between any obstacle and the motor vehicle; and
        - distance of visibility in the presence of mistiness.

13. Method according to claim 12, **characterised in that** the operation of determination uses triangulation between two second sources of light and a light sensor.

14. Method according to claim 12, **characterised in that** the operation of determination uses triangulation between a second source of light and two light sensors.

15. Method according to claim 12, **characterised in that** the operation of determination uses triangulation between two second sources of light and two light sensors.

16. Vehicle, in particular of the motor vehicle type, **characterised in that** it comprises a system for detection of conditions of travel on a road according to any one of claims 1 to 11.

**Patentansprüche**

1. System zur Erkennung von Straßenverkehrsverhältnissen, das an einem Kraftfahrzeug angebracht ist, mit

- wenigstens einem rechten Scheinwerfer (PD) und einem linken Scheinwerfer (PG), die jeweils eine erste Lichtquelle (15) umfassen, die ein sichtbares Lichtbündel aussendet,
- wenigstens einer Kamera (32) zur Aufnahme von Bildern der Straßenszene,

**dadurch gekennzeichnet, dass** wenigstens ein Scheinwerfer (30) umfasst:

- eine zweite Lichtquelle (11), die ein Infrarotlichtbündel (22) in Richtung einer Straßenszene aussendet und/oder
- einen von der Kamera (32) zur Aufnahme von Bildern der Straßenszene verschiedenen Lichtsensor (36), der das von der Straßenszene reflektierte Infrarotlichtbündel zu empfangen vermag,
- wobei das Infrarotlichtbündel (22) ein emittiertes moduliertes, insbesondere hochfrequentes Signal überträgt, und dass das System umfasst:
- optische Mittel (38), um wenigstens einen Teil des reflektierten Infrarotlichtbündels zu dem Lichtsensor (36) zu leiten, und
- Mittel zum Erkennen eines empfangenen modulierten Signals in dem reflektierten Infrarotlichtbündel, das dem emittierten modulierten Signal entspricht, und zum Bestimmen der Verkehrsverhältnisse in Abhängigkeit der Laufzeit des Lichts zwischen einem Startsignal der Lichtemission, der Reflexion des Lichts an einem Hindernis und seiner Rückkehr zum Lichtsensor (36) oder in Abhängigkeit der Phasenverschiebung zwischen einem modulierten emittierten Licht und dem empfangenen rückgestreuten Licht.

2. System nach Anspruch 1,
   **dadurch gekennzeichnet, dass** der Lichtsensor ein schneller Photodetektor ist.

3. System nach Anspruch 1 oder 2,
   **dadurch gekennzeichnet, dass** die optischen Mittel (38) Kollimationsmittel vom Typ Objektiv oder Linse aufweisen, um auf dem Lichtsensor eine Abbildung der Straßenszene zu bilden.

4. System nach Anspruch 1 oder 2,
   **dadurch gekennzeichnet, dass** die optischen Mittel (38) einen Reflektor umfassen, um wenigstens einen Teil des reflektierten Infrarotlichtbündels zur Bildaufnahmekamera und zum Lichtsensor zu reflektieren.

5. System nach Anspruch 4,
   **dadurch gekennzeichnet, dass** der Reflektor eine innen in der Kamera angeordnete semitransparente Platte ist.

6. System nach einem der Ansprüche 1 bis 5,
   **dadurch gekennzeichnet, dass** der Sensor in der Bildaufnahmekamera oder in dem Scheinwerfer integriert ist.

7. System nach einem der Ansprüche 1 bis 6,
   **dadurch gekennzeichnet, dass** die zweite Lichtquelle (1) eine Laserdiode ist.

8. System nach einem der Ansprüche 1 bis 7,
   **dadurch gekennzeichnet, dass** es zwei Lichtsensoren umfasst, wobei jeder Sensor in einem Fahrzeugscheinwerfer oder in einer Kamera integriert ist.

9. System nach einem der Ansprüche 1 bis 8,
   **dadurch gekennzeichnet, dass** es zwei zweite Lichtquellen umfasst, die jeweils in einem Scheinwerfer angebracht sind und jeweils ein Infrarotlichtbündel aussenden, wobei die beiden Infrarotlichtbündel von wenigstens einem Lichtsensor empfangen werden.

10. System nach einem der Ansprüche 1 bis 9,
    **dadurch gekennzeichnet, dass** das Infrarotlichtbündel kontinuierlich moduliert oder impulsmoduliert ist.

11. System nach Anspruch 9 oder 10,
    **dadurch gekennzeichnet, dass** die von den zwei zweiten Lichtquellen emittierten Infrarotlichtbündel unabhängig voneinander moduliert sind.

12. Verfahren zur Erkennung von Straßenverkehrsverhältnissen, das durch ein System nach einem der Ansprüche 1 bis 11 durchgeführt wird, **dadurch gekennzeichnet, dass** es die folgenden Schritte umfasst:

    - Aussenden wenigstens eines modulierten Infrarotlichtbündels (22),
    - Empfangen wenigstens eines durch ein Hindernis oder eine Bewölkung in der Straßenszene reflektierten Infrarotlichtbündels,
    - Auswertung des reflektierten Infrarotlichtbündels, und
    - Bestimmen wenigstens einer der nachfolgenden Verkehrsverhältnisse in Abhängigkeit der Laufzeit oder der Phasenverschiebung und der Form des reflektierten Infrarotlichtbündels:

      - Bewölkung vorhanden / nicht vorhanden,
      - Abstand zwischen einem möglichen Hindernis und dem Kraftfahrzeug, und
      - Sichtweite bei vorhandener Bewölkung.

13. Verfahren nach Anspruch 12,
    **dadurch gekennzeichnet, dass** bei dem Bestimmungsvorgang eine Triangulation zwischen zwei zweiten Lichtquellen und einem Lichtsensor herangezogen wird.

14. Verfahren nach Anspruch 12,
**dadurch gekennzeichnet, dass** bei dem Bestimmungsvorgang eine Triangulation zwischen einer zweiten Lichtquelle und zwei Lichtsensoren herangezogen wird.

15. Verfahren nach Anspruch 12,
**dadurch gekennzeichnet, dass** bei dem Bestimmungsvorgang eine Triangulation zwischen zwei zweiten Lichtquellen und zwei Lichtsensoren herangezogen wird.

16. Fahrzeug, insbesondere vom Typ Kraftfahrzeug,
**dadurch gekennzeichnet, dass** es ein System zur Erkennung von Straßenverkehrsverhältnissen nach einem der Ansprüche 1 bis 11 umfasst.

**Fig. 1**

**Fig. 2**

**Fig. 3**

Vers capteur gauche

**Fig. 4A**

**Fig. 4B**

**Fig. 4C**

**EP 1 553 429 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1298481 A
- EP 0505237 A
- US 4931767 A
- US 6108084 A
- EP 1369639 A